# EUROPÄISCHE PATENTSCHRIFT

(11) **EP 2 581 277 B1**
(45) Veröffentlichungstag und Bekanntmachung des Hinweises auf die Patenterteilung: **10.05.2017**
(21) Anmeldenummer: 12186686.7
(22) Anmeldetag: 28.09.2012
(51) Int. Cl.: B60R 25/021, B60R 25/0215

(54) **Vorrichtung für ein Sicherheitssystem eines Kraftfahrzeuges mit einer autonom, unabhängig vom Kraftfahrzeug vorgesehenen Elektronik**
Device for a safety system of a motor vehicle with an autonomous electronics system which is independent of the motor vehicle
Dispositif pour un système de sécurité d'un véhicule automobile avec un système électronique conçu de manière autonome et indépendante par rapport au véhicule

(30) Priorität: 12.10.2011 DE 102011054437
(43) Veröffentlichungstag der Anmeldung: 17.04.2013
(73) Patentinhaber: Huf Hülsbeck & Fürst GmbH & Co. KG, 42551 Velbert (DE)
(72) Erfinder: Zech, Michael, 42553 Velbert (DE); Hansen-Rüther, Dirk, 42289 Wuppertal (DE)
(74) Vertreter: Vogel, Andreas

(56) Entgegenhaltungen:
- DE-A1- 10 046 576
- DE-A1- 10 052 316
- DE-A1-102005 019 864
- DE-A1-102007 017 344

## Beschreibung

Die Erfindung betrifft eine Vorrichtung für ein Sicherheitssystem eines Kraftfahrzeuges um mit einem Sperrglied ein funktionswesentliches Bauteil, insbesondere eine Lenksäule zu blockieren, mit einer autonom, unabhängig vom Kraftfahrzeug vorgesehenen Elektronik, die in Signalverbindung mit einem Antrieb zur Bewegung des Sperrgliedes bringbar ist. Zudem bezieht sich die Erfindung auf ein Sicherheitssystem umfassend eine Zutrittskontrolleinheit und eine Fahrberechtigungskontrolleinheit eines Kraftfahrzeuges, wobei die Fahrberechtigungskontrolleinheit die erfindungsgemäße Vorrichtung aufweist. Ferner bezieht sich die Erfindung auf ein Verfahren einer Fahrberechtigungskontrolleinheit mit einer Elektronik, die autonom, unabhängig von einem Kraftfahrzeug eine Ansteuerung eines Antriebes, insbesondere eines Sperrgliedes durchführt.

In der DE 100 46 576 A1 ist ein Sicherheitssystem für ein Kraftfahrzeug, mit mindestens einem Sensor zur Erfassung eines Betriebs- oder Ereignisparameters des Kraftfahrzeuges, einer Sicherheitseinrichtung und einer Elektronik beschrieben. In der DE 100 52 316 A1 ist eine Vorrichtung zur Ansteuerung einer elektrischen Sicherheitseinrichtung für ein Kraftfahrzeug mit einer ersten Steuereinrichtung und einer zweiten Steuereinrichtung vorgeschlagen. In der DE 10 2007 017 344 A1 ist eine elektrische Lenkungsverriegelung für ein Fahrberechtigungssystem mit einer Keyless-Go-Funktionalität bei einem Kraftfahrzeug offenbart. Zudem ist ein bewegbares Sperrglied offenbart, das in einen Verriegelungszustand, bei dem die Lenksäule blockiert ist, und in einen Entriegelungszustand bringbar ist, bei dem die Lenksäule losgelöst ist. Das Sperrglied wird über einen Antrieb zwischen seinen beiden Positionen bewegt. Bei dieser Ausführungsform der Lenkungsverriegelung steuert die Elektronik den Antrieb autonom in eigensicherer Art an. Das Fahrberechtigungssystem benötigt somit kein zusätzliches Steuergerät zur Generierung der für den Betrieb des Kraftfahrzeuges notwendigen Signale. Somit ist ein selbstständiger Betrieb der Lenkungsverriegelung ohne ein zusätzliches Steuergerät möglich. Aufgrund der wachsenden Anforderungen derartiger Vorrichtungen besteht das Bestreben die Sicherheit hinsichtlich der Funktionsweise weiter zu erhöhen. Insbesondere soll vermieden werden, dass während der Fahrt ein ungewolltes Blockieren der Lenksäule ausgelöst wird.

Zur Lösung der Aufgabe wird eine Vorrichtung mit sämtlichen Merkmalen des Anspruches 1 vorgeschlagen. In den abhängigen Ansprüchen sind bevorzugte Alternativen ausgeführt.

Es ist erfindungsgemäß vorgesehen, dass die Elektronik eine Sicherheitsschnittstelle aufweist, die eine Bereitstellung mindestens eines Betriebsparameters des Kraftfahrzeuges einer in der Elektronik integrierten Entscheidungseinheit ermöglicht, mindestens ein Ereignisparameter zusätzlich in die Entscheidungseinheit einlesbar ist, und die Entscheidungseinheit derart ausgeführt ist, dass in Abhängigkeit vom Betriebsparameter und nur im Vorliegen eines definierten Ereignisparameters die Entscheidungseinheit eine Aktivierung des Antriebes ausführt. Die Elektronik der erfindungsgemäßen Vorrichtung arbeitet selbstständig und benötigt kein weiteres am Kraftfahrzeug angeordnetes Steuerelement, Steuergerät etc., um zu entscheiden, inwieweit das Sperrglied zur Blockierung des funktionswesentlichen Bauteils bewegt wird. Die erfindungsgemäße Elektronik benötigt lediglich im Rahmen des Betriebsparameters Fahrzeugdaten als Entscheidungshilfe. Zur Erhöhung der Sicherheit und korrekten Funktionsfähigkeit der erfindungsgemäßen Vorrichtung fordert die Elektronik mindestens einen Ereignisparameter, um anhand des Betriebsparameters zu entscheiden, inwieweit eine Aktivierung des Antriebs, insbesondere zur Blockierung des funktionswesentlichen Bauteils oder zum Loslösen des Sperrgliedes vom funktionswesentlichen Bauteil ausgeführt wird. Der Ereignisparameter kann ebenfalls über die Sicherheitsschnittstelle zur Elektronik, insbesondere zur Entscheidungseinheit übermittelt werden. Ebenfalls ist es denkbar, dass der Ereignisparameter über zumindest eine weitere Schnittstelle in die Elektronik gelangt. Die Sicherheitsschnittstelle kann kabelgebunden sein. Ebenfalls sind diverse Funkübertragungen zur Bereitstellung des Betriebsparameters und/oder des Ereignisparameters für die Entscheidungseinheit möglich. Der Vorteil der erfindungsgemäßen Vorrichtung ist, dass ein nicht gewolltes Auslösen des Antriebes weitgehend ausgeschlossen werden kann, da eine Art zweistufige Überprüfung in der Entscheidungseinheit vorgenommen wird, wobei die erste Überprüfung eine Auswertung des Betriebsparameters vornimmt und die zweite Überprüfung das Vorliegen mindestens eines Ereignisparameters fordert. Hierbei ist vorteilhafterweise der Ereignisparameter unabhängig von den Fahrzeugdaten, wobei der Ereignisparameter bewusst oder unbewusst vom Benutzer auslösbar ist. Die erste Überprüfung kann vor der zweiten Überprüfung, nach der zweiten Überprüfung oder auch gleichzeitig mit der zweiten Überprüfung erfolgen.

Vorteilhafterweise kann der Ereignisparameter als Triggerpunkt ausgebildet sein, der einen Auslösezeitpunkt für die Elektronik, insbesondere für die Entscheidungseinheit in Gang setzt, um zumindest den einen Betriebsparameter zu überprüfen, inwieweit dieser einen definierten Wert aufweist, um anschließend eine Aktivierung des Antriebes auszulösen oder nicht.

Es ist denkbar, dass die Elektronik mit einem externen Bussystem des Kraftfahrzeuges verbindbar ist, insbesondere mit einem LIN-Bussystem oder CAN-Bussystem. Das Bussystem, welches die Elektronik mit Fahrzeugdaten versorgt, kann z. B. ein Eindraht-Bussystem oder ein Feldbussystem sein. Das Bussystem ist vorteilhafterweise mit Fahrzeugsensoren und Fahrzeugaktoren in Kommunikation.

Bei einer möglichen Ausführungsform der Erfindung können mindestens zwei Betriebsparameter in der Entscheidungseinheit überprüft werden, um eine Aktivierung des Antriebes zu ermöglichen, wobei jedem Betriebsparameter ein Schwellwert zugeordnet ist, wobei eine Aktivierung des Antriebs erst dann auslösbar ist, falls beide Betriebsparameter ihre Schwellwerte erreicht haben. Die Sicherheit kann durch den Einsatz von zwei Betriebsparametern weiter erhöht werden, um eine fehlerhafte Aktivierung des Antriebes, insbesondere des Sperrgliedes auszuschließen. Somit sind zwei Betriebsparameter von der Entscheidungseinheit zu überprüfen, inwieweit ein festgelegter Schwellwert hinsichtlich beider Betriebsparameter erreicht wird, um eine Aktivierung des Antriebes auszuführen. Selbstverständlich erfolgt eine Überprüfung des Ereignisparameters, so dass auch hier eine zweistufige Auswertung sowohl der Betriebsparameter als auch des Ereignisparameters erfolgt. In einer weiteren Möglichkeit können auch 3 Betriebsparameter oder mehr als 3 Betriebsparameter als Entscheidungshilfe verwendet werden.

In einer möglichen Ausgestaltung der Erfindung kann der Betriebsparameter die Fahrzeuggeschwindigkeit, die Motordrehzahl sein. Beispielsweise ist der erste Betriebsparameter die Fahrzeuggeschwindigkeit und der zweite Betriebsparameter die Motordrehzahl. Erst wenn beide Betriebsparameter unterhalb eines Schwellwertes liegen, kann eine Blockierung des funktionswesentlichen Bauteils aktiviert werden. Ferner kann gemäß der vorliegenden Erfindung der Ereignisparameter durch mindestens eines der folgenden Ereignisse bestimmt sein: Handbremse aktiviert, Tür, insbesondere Fahrzeugtür geöffnet, aktives Betätigen einer Taste eines ID-Gebers, Gewichtssensor eines Fahrzeugsitzes, insbesondere des Fahrersitzes ermittelt einen definierten Gewichtswert, ID-Geber befindet sich außerhalb einer Reichweite des Fahrzeuges, Betätigen eines Bremspedals oder Kupplungspedals, Berühren eines Fahrzeuggriffes der Fahrzeugtür, Berühren eines Start-Stopp-Schalters zum Starten des Fahrzeugmotors, Annäherung an den Start-Stopp-Schalters zum Starten des Kraftfahrzeugmotors. Die Überprüfung des Ereignisparameters kann zum einen für eine Blockierung des funktionswesentlichen Bauteils verwendet werden. Zum anderen kann der Ereignisparameter überprüft werden, um ein etwaiges Loslösen des Sperrgliedes vom funktionswesentlichen Bauteil auszulösen. Gemäß der vorliegenden Erfindung kann es vorgesehen sein, dass zum Loslösen des Sperrgliedes vom funktionswesentlichen Bauteil lediglich die Entscheidungseinheit den Ereignisparameter überprüft, ohne eine Überprüfung der Betriebsparameter als Entscheidungshilfe durchzuführen.

Erfindungsgemäß löst die Aktivierung des Antriebes eine Bewegung des Sperrgliedes in den Verriegelungszustand aus, bei dem das funktionswesentliche Bauteil blockiert ist, und/oder dass die Aktivierung des Antriebes eine Bewegung des Sperrgliedes in den Entriegelungszustand auslöst, bei dem das funktionswesentliche Bauteil losgelöst vom Sperrglied ist.

Vorteilhafterweise kann der Antrieb einen Federspeicher aufweisen, der für die Bewegung des Sperrgliedes sorgt. Somit kann auch bei einem Stromausfall für eine Verriegelung des Bauteils, insbesondere für eine Lenksäulenverriegelung über den Federspeicher das Sperrglied in den Verriegelungszustand bewegt werden. Erfindungsgemäß ist der Antrieb mit einer autarken Energieversorgung ausgeführt, die unabhängig von der übrigen Fahrzeugelektronik für die Funktionsweise der erfindungsgemäßen Verriegelungsvorrichtung sorgt. Die autarke Energieversorgung versorgt erfindungsgemäß die Elektronik und/oder den Antrieb, insbesondere die Entscheidungseinheit mit Energie. Die autarke Energieversorgung kann z.B. durch einen Doppelschichtkondensator ausgeführt sein. Vorzugsweise ist der Doppeltschichtkondensator mit zwei Elektroden ausgeführt, die mit einem Elektrolyten benetzt sind. Hierbei verhalten sich die Elektroden mit einer Ladungsträgerschicht als Dielektrikum wie zwei Kondensatoren, die über den elektrisch leitenden Elektrolyten in Reihe geschaltet sind. Die Energie wird hierbei elektrostatisch gespeichert. Alternative autarke Energieversorgungen sind erfindungsgemäß selbstverständlich einsetzbar, die die Elektronik und/oder den Antrieb mit elektrischer Leistung versorgen.

Die erfindungsgemäße Aufgabe wird zudem mit einem Sicherheitssystem umfassend eine Zutrittskontrolleinheit und eine Fahrberechtigungskontrolleinheit eines Kraftfahrzeuges gelöst, wobei die Fahrberechtigungskontrolleinheit die erfindungsgemäße Vorrichtung gemäß einem der Ansprüche 1 bis 6 aufweist. Vorteilhafterweise kann die Zutrittskontrolleinheit in einen Sicherungsmodus und in einen Entsicherungsmodus gebracht werden, wobei in dem Sicherungsmodus die Türen und/oder die Heckklappe des Kraftfahrzeuges verriegelt sind und in dem Entsicherungsmodus die Türen und/oder die Heckklappe des Kraftfahrzeuges entriegelt sind. Vorteilhafterweise befindet sich das Sperrglied im Verriegelungszustand, wenn die Zutrittskontrolleinheit den Sicherungsmodus einnimmt. Im Entsicherungsmodus der Zutrittskontrolleinheit ist es denkbar, dass das Sperrglied sowohl den Verriegelungszustand als auch den Entriegelungszustand einnehmen kann. Es ist denkbar, dass die Zutrittskontrolleinheit und die Fahrberechtigungs-kontrolleinheit in Signalverbindung stehen.

Die erfindungsgemäße Vorrichtung innerhalb der Fahrberechtigungskontrolleinheit kann eine Lenkungsverriegelung sein, insbesondere eine elektrische oder elektromechanische Lenkungsverriegelung sein. Das Sicherheitssystem kann ein sogenanntes "Keyless-Entry-System" und/oder "Keyless-Go-System" eines Kraftfahrzeuges mit umfassen. Bei den genannten "Keyless-Systemen" erfolgt eine Authentifizierung, die überprüft, inwieweit sich die dem Fahrzeug nähernde Person zugangsberechtigt ist. Ein Authentifizierungsvorgang kann beispielsweise über einen ID-Geber, den der Benutzer bei sich trägt, und einer fahrzeugseitigen Steuereinheit erfolgen. Diese Steuereinheit kann ebenfalls in einer weiteren Ausführungsform der Erfindung in der Elektronik der erfindungsgemäßen Vorrichtung enthalten sein, die auch für die Überprüfung des mindestens einen Betriebsparameters sowie des Ereignisparameters zuständig ist. Der ID-Geber und die fahrzeugseitige Elektronik stehen hierbei in Datenkommunikation, und erst bei einer positiven Authentifizierung erfolgt ein Wechsel vom Sicherungsmodus in den Entsicherungsmodus und umgekehrt.

Zudem wird die oben genannte Aufgabe durch ein Verfahren mit sämtlichen Merkmalen des Anspruches 8 gelöst. Vorteilhafterweise kann die Elektronik in einer Entscheidungseinheit mindestens zwei Betriebsparameter berücksichtigen, um eine Bewegung des Sperrgliedes in den Verriegelungszustand auszulösen.

In einer weiteren Ausführungsform kann die Elektronik unabhängig vom Betriebsparameter und lediglich in Abhängigkeit vom Ereignisparameter eine Bewegung des Sperrgliedes in den Entriegelungszustand auslösen. Das erfindungsgemäße Verfahren ist derart aufgebaut, dass für die Bewegung des Sperrgliedes in den Verriegelungszustand die Elektronik mindestens einen Betriebsparameter sowie den Ereignisparameter entsprechend überprüft, und in Abhängigkeit von dem jeweiligen Wert des Betriebsparameters sowie des Ereignisparameters entscheidet, inwieweit eine Blockierung des funktionswesentlichen Bauteils ausgelöst wird.

Vorteilhafterweise kann der Ereignisparameter bewusst vom Benutzer ausgelöst werden oder der Ereignisparameter unbewusst ausgelöst werden.

Vorteilhafterweise kann die erfindungsgemäße Vorrichtung als ein intelligentes System ausgeführt sein, um ein "Keyless-System" am Kraftfahrzeug zu realisieren. Die Elektronik kann zum einen Steuereinheit für die Zutrittskontrolleinheit als auch für die Fahrberechtigungskontrolleinheit sein, was wiederum zur Einsparung von entsprechenden Steuergeräten beiträgt.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen dargestellt sind. Es zeigen:
- Figur 1: eine rein schematische Darstellung einer erfindungsgemäßen Vorrichtung einer Fahrberechtigungskontrolleinheit, in der eine Lenkungsverriegelung für ein Kraftfahrzeug integriert ist,
- Figur 2: eine weitere schematische Darstellung der erfindungsgemäßen Vorrichtung gemäß Figur 1,
- Figur 3: eine mögliche Ausführungsform der Elektronik, die in Figur 1 zum Einsatz kommen kann, und
- Figur 4: eine schematische Darstellung eines Kraftfahrzeuges mit einer erfindungsgemäßen Vorrichtung gemäß Figur 1.

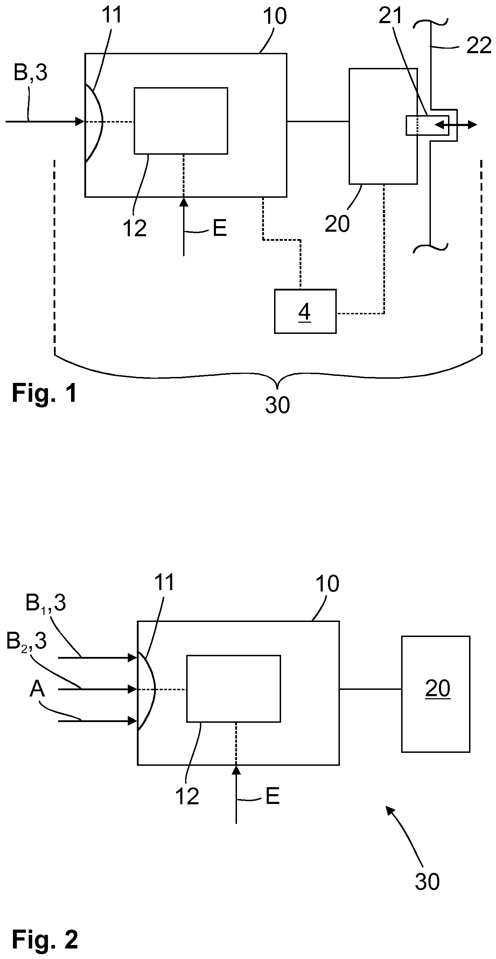

Figur 1 zeigt eine Vorrichtung 30, die als Fahrberechtigungskontrolleinheit eines Kraftfahrzeuges ausgeführt ist, wobei ein Antrieb 20 der Vorrichtung 30 zugeordnet ist, um ein Sperrglied 21 zwischen einem Verriegelungszustand und einem Entriegelungszustand bewegen zu können. In dem Verriegelungszustand wird ein funktionswesentliches Bauteil 22 des Kraftfahrzeuges 1 blockiert, wobei das funktionswesentliche Bauteil 22 in den gezeigten Ausführungsbeispielen gemäß Figur 1 bis Figur 4 eine Lenksäule 22 des Kraftfahrzeuges 1 ist. Im Entriegelungszustand ist das funktionswesentliche Bauteil 22 losgelöst vom Sperrglied 21, so dass das Bauteil 22 über das Lenkrad innerhalb des Kraftfahrzeuges 1 vom Benutzer bewegt werden kann. Im vorliegenden Ausführungsbeispiel ist in der erfindungsgemäßen Vorrichtung 30 eine elektromechanische Lenkungsverriegelung integriert, die im Wesentlichen über die Bauteile 20, 21 realisierbar ist.

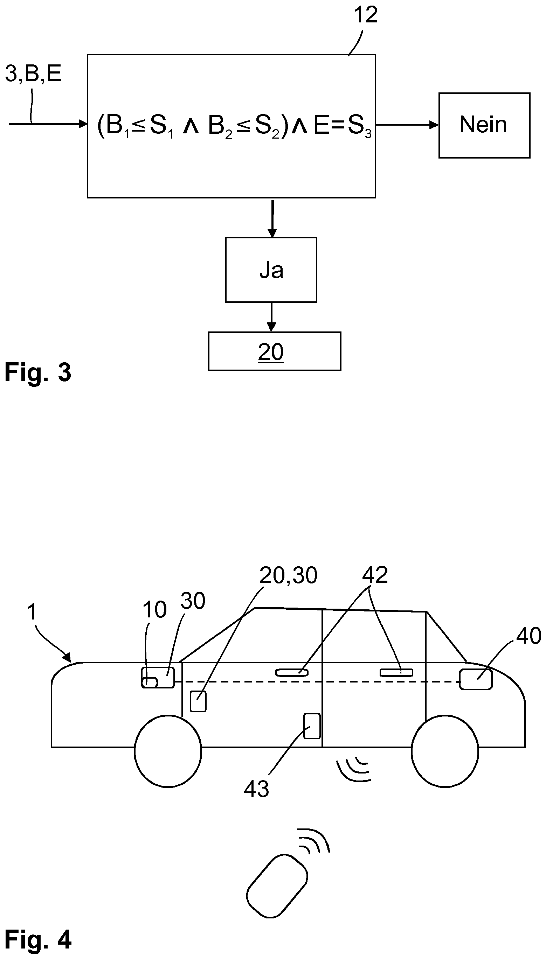

Die Vorrichtung 30 ist über ein Bussystem 3 mit der restlichen Fahrzeugelektronik, die nicht explizit dargestellt ist, in Signalverbindung. Gemäß Figur 1 sowie Figur 4 umfasst die Vorrichtung 30 eine Elektronik 10 mit einer Entscheidungseinheit 12, wobei die Elektronik 10 autonom und unabhängig vom Kraftfahrzeug 1 entscheidet, inwieweit der Antrieb 20 zur Bewegung des Sperrgliedes 21 anzusteuern ist. Das bedeutet, dass keine Elektronik, insbesondere Steuerung innerhalb des Kraftfahrzeuges 1 verantwortlich ist, inwieweit eine Lenkungsverriegelung auszuführen ist oder nicht.

Gemäß der dargestellten Ausführungsbeispiele weist die Elektronik 10 eine Sicherheitsschnittstelle 11 auf, die eine Verbindung mit der Fahrzeugelektronik ermöglicht. Die Sicherheitsschnittstelle 11 ermöglicht eine Bereitstellung mindestens eines Betriebsparameters B des Kraftfahrzeuges 1, wobei der Wert des Betriebsparameters B der Entscheidungseinheit 12 der Elektronik 10 übermittelt wird. Zudem erhält die Elektronik 10 mindestens einen Wert eines Ereignisparameters E. Die Entscheidungseinheit 12 entscheidet in Abhängigkeit vom Wert des Betriebsparameters B und vom Wert des Ereignisparameters E, inwieweit eine Aktivierung des Antriebes 20 auszuführen ist, insbesondere inwieweit das Sperrglied 21 zwischen dem Verriegelungszustand und dem Entriegelungszustand zu bewegen ist.

Der Vorteil dieser Vorrichtung 30 ist, dass die Elektronik 10 selbstständig und eigenständig anhand der vom Kraftfahrzeug 1 zur Verfügung stehenden Betriebsparameter B und von mindestens einem Ereignisparameter E entscheidet, inwieweit der Antrieb 20 zur Bewegung des Sperrgliedes 21 anzusteuern ist.

In Figur 2 ist ein weiteres Ausführungsbeispiel gezeigt, welches im Wesentlichen den Ausführungen gemäß Figur 1 entspricht. Die wesentliche Spezifikation gemäß Figur 2 ist, dass die Entscheidungseinheit 12 durch das externe Bussystem 3 mindestens zwei Betriebsparameter B₁, B₂ vom Kraftfahrzeug 1 über die Sicherheitsschnittstelle 11 erhält. Bei den Betriebsparametern B₁, B₂ gemäß aller gezeigten Ausführungsbeispiele kann es sich beispielsweise um die Fahrzeuggeschwindigkeit und/oder die Motordrehzahl handeln. In Figur 3 ist verdeutlicht, wie die Abfrage der Entscheidungseinheit 12 hinsichtlich der Betriebsparameter B und des Ereignisparameters E aufgebaut sein kann. Bei der in Figur 3 gezeigten Abfrage ist B₁ die Fahrzeuggeschwindigkeit und B₂ die Motordrehzahl. Wenn nun ein Triggerpunkt ausgelöst wird, beispielsweise über eine Aktivierung der Handbremse innerhalb des Kraftfahrzeuges oder über einen Öffnungsvorgang der Kraftfahrzeugtür oder über eine Betätigung einer Taste eines ID-Gebers 41 (siehe Figur 4) oder über eine definierte Ermittlung eines Gewichtswertes von einem Gewichtssensor eines Fahrzeugsitzes oder eines Verlassens einer definierten Reichweite oder Entfernung vom Kraftfahrzeug oder eines Betätigens eines Bremspedals oder Kupplungspedals des Kraftfahrzeuges 1 oder eines Berührens eines Fahrzeuggriffes 42 einer Fahrzeugtür (siehe Figur 4), erhält der Ereignisparameter einen definierten Wert, den die Entscheidungseinheit 12 erhält und mit einem Schwellwert S₃ vergleicht. Erst wenn der Wert des Ereignisparameters E ≤ S₃ ist und erst wenn beide Betriebsparameter B₁ und B₂ die Bedingungen gemäß Figur 3 erfüllen, entscheidet die Elektronik 10, dass der Antrieb 20 angesteuert wird, um das Sperrglied 21 in den Verriegelungszustand zu bewegen. Ferner zeigt Figur 2 schematisch, dass ein Authentifizierungsvorgang kraftfahrzeugseitig durchlaufen wird, inwieweit der Benutzer, der eine Entriegelung oder Verriegelung des Sperrgliedes 21 auslösen möchte, tatsächlich die berechtigte Person ist. Falls die Authentifizierung positiv ist, erhält die Elektronik 10 über das Signal A die entsprechende Mitteilung. Ebenfalls ist es denkbar, dass die Vorrichtung 30 selbstständig und eigensicher eine Authentifizierung für die Zutrittskontrolle durchführen kann, welches explizit nicht dargestellt ist. Vorteilhafterweise weist in diesem Ausführungsbeispiel die Vorrichtung 30 Sende- und Empfangseinheiten auf, die in Datenkommunikation zur Außenwelt, insbesondere mit dem ID-Geber, den der Benutzer bei sich trägt, steht.

Gemäß Figur 4 ist verdeutlicht, dass die erfindungsgemäße Vorrichtung 30 in Datenkommunikation bzw. in Signalverbindung mit einer Zutrittskontrolleinheit 40 stehen kann. Die Zutrittskontrolleinheit 40 steht wiederum in Datenkommunikation mit dem ID-Geber 41. Der ID-Geber 41 kann als Chipkarte ausgeführt sein, die der Benutzer bei sich trägt, wobei der Benutzer keine aktiven Handlungen am ID-Geber 41 ausüben muss, um einen Zugang und eine Fahrberechtigung für das Kraftfahrzeug 1 zu erhalten. Ebenfalls ist es denkbar, dass der ID-Geber 41 vom Benutzer über die Betätigung von zumindest einer Taste zu aktivieren ist, damit eine Datenkommunikation zwischen den Einheiten 30, 40, 41 entsteht. Bei beiden soeben beschriebenen Möglichkeiten hinsichtlich des ID-Gebers 41 erfolgt zunächst eine Authentifizierung, die überprüft, inwieweit der den ID-Geber 41 tragende Benutzer die berechtigte Person ist. Falls eine positive Authentifizierung vorliegt, wird das Schloss 43 der Fahrzeugtür aktiviert, welches die Tür entriegelt. Der Benutzer kann nun den Griff 42 betätigen, um einen Öffnungsvorgang der Fahrzeugtür auszulösen. Die Fahrberechtigungskontrolleinheit 30 mit der erfindungsgemäßen Vorrichtung 10 kann nun derart ausgestaltet sein, dass über einen Triggerpunkt, insbesondere über den Ereignisparameter E der Antrieb 20 zur Bewegung des Sperrgliedes 21 in den Entriegelungszustand ausgelöst wird. Die Auslösung kann beispielsweise über eine Berührung eines Start-Stopp-Schalters innerhalb des Kraftfahrzeuges 1 erfolgen oder bereits schon bei der Entriegelung des Schlosses 43 oder durch weitere aktive Handlungen des Benutzers, wie z. B. Betätigen eines Bremspedals oder Kupplungspedals, Berühren eines Fahrzeuggriffes 42 der Fahrzeugtür, Aktivierung des Gewichtsensors am Fahrzeugsitz etc. Auch hier kann ein Authentifizierungsvorgang durchgeführt werden, um zu überprüfen, inwieweit der berechtigte Benutzer eine Entriegelung des Sperrgliedes 21 wünscht.

Gemäß Figur 1 sei noch erwähnt, dass eine autarke Energieversorgung 4 vorhanden ist, die beispielsweise die Elektronik 10 und/oder den Antrieb 20 mit elektrischer Leistung versorgt. Die Energieversorgung 4 ist Bestandteil der erfindungsgemäßen Vorrichtung 30, das bedeutet, dass die Energieversorgung 4 unabhängig vom Kraftfahrzeug erfolgt. Die Energieversorgung 4 kann in einem möglichen Ausführungsbeispiel lediglich im Notfall zum Einsatz kommen, falls die Fahrzeugelektronik einschließlich die Energieversorgung des Kraftfahrzeuges 1 ausfallen sollte. Im Normalfall sorgt die Batterie des Kraftfahrzeuges dafür, dass die wesentlichen elektronischen Bauteile der erfindungsgemäßen Vorrichtung 30 bzw. der Zutrittskontrolleinheit 40 mit elektrischer Leistung versorgt werden. Die Energieversorgung 4 kann zumindest ein Energiespeicher, ein Akkumulator, eine Brennstoffzelle und/oder eine Solarzelle oder eine beliebige Kombination der soeben genannten Ausführungen sein.

### Bezugszeichenliste

- 1: Kraftfahrzeug
- 3: Bussystem
- 4: Energieversorgung

- 10: Elektronik
- 11: Sicherheitsschnittstelle
- 12: Entscheidungseinheit

- 20: Antrieb
- 21: Sperrglied
- 22: Bauteil

- 30: Fahrberechtigungskontrolleinheit, Vorrichtung

- 40: Zutrittskontrolleinheit
- 41: ID-Geber
- 42: Griff
- 43: Schloss

- A: Authentifizierung
- B: Betriebsparameter
- E: Ereignisparameter
- S: Schwellwert

## Patentansprüche

1. Vorrichtung für ein Sicherheitssystem eines Kraftfahrzeuges (1) um mit einem Sperrglied (21) ein funktionswesentliches Bauteil (22), insbesondere eine Lenksäule zu blockieren, mit einer autonom, unabhängig vom Kraftfahrzeug (1) vorgesehenen Elektronik (10), die in Signalverbindung mit einem Antrieb (20) zur Bewegung des Sperrgliedes (21) bringbar ist,
wobei die Elektronik (10) eine Sicherheitsschnittstelle (11) aufweist, die eine Bereitstellung mindestens eines Betriebsparameters (B) des Kraftfahrzeuges (1) einer in der Elektronik (10) integrierten Entscheidungseinheit (12) ermöglicht,
mindestens ein Ereignisparameter (E) zusätzlich in die Entscheidungseinheit (12) einlesbar ist, und
die Entscheidungseinheit (12) derart ausgeführt ist, dass in Abhängigkeit vom Betriebsparameter (B) und nur im Vorliegen eines definierten Ereignisparameters (E) die Entscheidungseinheit (12) eine Aktivierung des Antriebes (20) ausführt,
**dadurch gekennzeichnet,**
**dass** eine Energieversorgung (4) vorgesehen ist, die fahrzeugunabhängig, autark die Elektronik (10) und/oder den Antrieb (20) mit elektrischer Leistung versorgt.

2. Vorrichtung nach Anspruch 1,
**dadurch gekennzeichnet,**
**dass** die Elektronik (10) mit einem externen Bussystem (3) des Kraftfahrzeuges (1) verbindbar ist, insbesondere mit einem LIN-Bussystem (3) oder CAN-Bussystem (3).

3. Vorrichtung nach Anspruch 1 oder 2,
**dadurch gekennzeichnet,**
**dass** mindestens zwei Betriebsparameter (B) in der Entscheidungseinheit (12) überprüft werden, um eine Aktivierung des Antriebes (20) zu ermöglichen, wobei die Entscheidungseinheit (12) für jeden der beiden Betriebsparameter (B) einen Schwellwert (S) aufweist, wobei eine Aktivierung des Antriebs (20) erst dann auslösbar ist, falls beide Betriebsparameter (B) ihre Schwellwerte (S) erreicht haben.

4. Vorrichtung nach einem der vorgenannten Ansprüche,
**dadurch gekennzeichnet,**
**dass** der Betriebsparameter (B) die Fahrzeuggeschwindigkeit und/oder die Motordrehzahl ist/sind.

5. Vorrichtung nach einem der vorgenannten Ansprüche,
**dadurch gekennzeichnet,**
**dass** der Ereignisparameter (E) durch mindestens eines der folgenden Ereignisse bestimmt ist:
Handbremse aktiviert,
Tür, insbesondere Fahrzeugtür geöffnet,
aktives Betätigen einer Taste eines ID-Gebers (41),
Gewichtssensor eines Fahrzeugsitzes, insbesondere des Fahrersitzes ermittelt einen definierten Gewichtswert,
ID-Geber (41) befindet sich außerhalb einer Reichweite des Fahrzeuges (1),
Betätigen eines Bremspedals oder Kupplungspedals,
Berühren eines Fahrzeuggriffes (1) der Fahrzeugtür,
Berühren eines Start-Stopp-Schalters zum Starten des Fahrzeugmotors,
Annäherung an den Start-Stopp-Schalters zum Starten des Kraftfahrzeugmotors.

6. Vorrichtung nach einem der vorgenannten Ansprüche,
**dadurch gekennzeichnet,**
**dass** die Aktivierung des Antriebes (20) eine Bewegung des Sperrgliedes (21) in den Verriegelungszustand auslöst, bei dem das funktionswesentliche Bauteil (22) blockiert ist, oder dass die Aktivierung des Antriebes (20) eine Bewegung des Sperrgliedes (21) in den Entriegelungszustand auslöst, bei dem das funktionswesentliche Bauteil (22) losgelöst vom Sperrglied (21) ist.

7. Sicherheitssystem umfassend eine Zutrittskontrolleinheit (40) und eine Fahrberechtigungskontrolleinheit (30) eines Kraftfahrzeuges (1),
**dadurch gekennzeichnet,**
**dass** die Fahrberechtigungskontrolleinheit (30) eine Vorrichtung gemäß einem der Ansprüche 1 bis 6 aufweist.

8. Verfahren einer Fahrberechtigungskontrolleinheit (30) mit einer Elektronik (10), die autonom, unabhängig von einem Kraftfahrzeug (1) eine Ansteuerung eines Antriebes (20) durchführt, der ein Sperrglied (21) zwischen einem Verriegelungszustand und einem Entriegelungszustand bewegt, wobei in dem Verriegelungszustand ein funktionswesentliches Bauteil (22) des Kraftfahrzeuges (1) blockiert ist und in dem Entriegelungszustand das funktionswesentliche Bauteil (22) losgelöst vom Sperrglied (21) ist,
wobei die Elektronik (10) in Abhängigkeit von mindestens einem Betriebsparameter (B) des Kraftfahrzeuges (1) und eines Vorliegens mindestens eines Ereignisparameters (E) entscheidet, den Antrieb (20) derart anzusteuern, dass das Sperrglied (21) in den Verriegelungszustand gebracht wird,
**dadurch gekennzeichnet,**
**dass** eine Energieversorgung (4) vorgesehen ist, die fahrzeugunabhängig, autark die Elektronik (10) und/oder den Antrieb (20) mit elektrischer Leistung versorgt.

9. Verfahren nach Anspruch 8,
**dadurch gekennzeichnet,**
**dass** die Elektronik (10) in einer Entscheidungseinheit (12) mindestens zwei Betriebsparameter (B) berücksichtigt, um eine Bewegung des Sperrgliedes (21) in den Verriegelungszustand auszulösen.

10. Verfahren nach Anspruch 8 oder 9,
**dadurch gekennzeichnet,**
**dass** die Elektronik (10) unabhängig vom Betriebsparameter (B) und lediglich in Abhängigkeit vom Ereignisparameter (E) eine Bewegung des Sperrgliedes (21) in den Entriegelungszustand auslöst.

11. Verfahren nach Anspruch 10,
**dadurch gekennzeichnet,**
**dass** der Ereignisparameter (E) bewusst vom Benutzer ausgelöst wird oder das der Ereignisparameter (E) unbewusst ausgelöst wird.

12. Verfahren nach einem der vorgenannten Ansprüche,
**dadurch gekennzeichnet,**
**dass** bevor das Sperrglied (21) bewegt wird, eine Authentifizierung (A) durchgeführt wird, um festzustellen, inwieweit eine Person berechtigt ist das Sperrglied (21) zu aktivieren.

## Claims

1. Device for protection system of a motor vehicle (1) in order to block a function essential component (22) particularly a steering column with a blocking element (21) with an autonomous provided electronic (10) independent from the motor vehicle (1) which can be brought in signal connection with a drive (20) for the movement of the blocking element (21), wherein the electronic (10) comprises a protection interface (11) which enables the provision of at least one operation parameter (B) of the motor vehicle (1) of a decision unit (12) integrated into the electronic (10), at least one incident parameter (E) which is additionally readable into the decision unit (12) and the decision unit (12) is configured such that in dependence from the operation parameter (B) and only with the existence of a defined event parameter (E) the decision unit (12) performs an activation of the drive (20) **characterized in that** an energy supply (4) is intended, which vehicle independently self-sufficiently supplies the electronic (10) and/or the drive (20) with electric power.

2. Device according to claim 1 **characterized in that** the electronic (10) is connectable with an external bussystem (3) of the motor vehicle (1) particularly a LIN-bussystem (3) or CAN-bussystem (3).

3. Device according to claim 1 or 2 **characterized in that** at least two operation parameters (B) are reviewed in the decision unit (12) in order to enable an activation of the drive (20) wherein the decision unit (12) comprises a threshold value (S) for each of both operating parameters (B) wherein an activation of the drive (20) is only provokable if both operating parameters (B) have reached their threshold value (S).

4. Device according to one of the preceding claims **characterized in that** the operating parameter (B) is the vehicle speed and/or the engine speed.

5. Device according to one of the preceding claims **characterized in that** the incident parameter (E) is determined by at least one of the following incidents:
hand brake activated,
door, particularly vehicle door opened,
active actuation of a button of the identification device (41),
weight sensor of a vehicle seat, particularly the driver seat determines a defined weight value,
identification device (41) is arranged outside a range of the vehicle (1),
actuation of a brake pedal or clutch pedal,
touching of vehicle handle (42) of the vehicle door,
touching of a start/stop switch for starting the vehicle engine,
approaching to the start/stop switch for starting the motor vehicle engine.

6. Device according to one of the preceding claims **characterized in that** the activation of the drive (20) triggers a movement of the blocking element (21) in the locking state with which the function essential component (22) is blocked or the activation of the drive (20) triggers a movement of the blocking element (21) in the unlocking state with which the function essential component (22) is uncoupled to the blocking element (21).

7. Protection system comprising an access control unit (40) and a driver authorization control unit (30) of a motor vehicle (1) **characterized in that** the driver authorization control unit (30) comprises a device according to one of claims 1 to 6.

8. Method of a driver authorization control unit (30) with an electronic (10) which autonomously performs an activation of a drive (20) independent from a motor vehicle (1), which moves a blocking element (21) between a locking state in an unlocking state, wherein in the locking state a function essential component (22) of the motor vehicle (1) is blocked and in the unlocking state the function essential component (22) is uncoupled from the blocking element (21), wherein the electronic (10) decides independence from at least one operation parameter (B) of the motor vehicle (1) and an existence of at least one incident parameter (E) to trigger the drive (20) such that the blocking element (21) is brought into the locking state **characterized in that** an energy supply (4) is provided which independently from the vehicle, autarkic supplies the electronic (10) and/or the drive (20) with electric power.

9. Method according to claim 8 **characterized in that** the electronic (10) considers at least two operation parameters (B) in a decision unit (12) in order to trigger a movement of the blocking element (21) in the locking state.

10. Method according to claim 8 or 9 **characterized in that** the electronic (10) triggers a movement of the blocking element (21) in the unlocking state independent from the operation parameter (B) and only in dependence from the incident parameter (E).

11. Method according to claim 10 **characterized in that** the incident parameter (E) is consciously triggered from a user or the incident parameter (E) is triggered unconsciously.

12. Method according to one of the preceding claims **characterized in that** previous to moving the blocking element (21) an authentication (A) is performed in order to determine if a person is authorized to activate the blocking element (21).

## Revendications

1. Dispositif pour un système de sécurité d'un véhicule automobile (1) destiné à bloquer un composant essentiel au fonctionnement (22), en particulier une colonne de direction, au moyen d'un élément de blocage (21), comprenant un système électronique (10) conçu de manière autonome et indépendante par rapport au véhicule (1), qui peut être mis en liaison de signalisation avec un entraînement (20) pour déplacer l'élément de blocage (21),
le système électronique (10) présentant une interface de sécurité (11) qui permet de mettre au moins un paramètre de fonctionnement (B) du véhicule automobile (1) à la disposition d'une unité de décision (12) intégrée au système électronique (10), au moins un paramètre d'événement (E) pouvant être lu en plus dans l'unité de décision (12), et
l'unité de décision (12) étant réalisée de façon que l'unité de décision (12) effectue une activation de l'entraînement (20) en fonction du paramètre de fonctionnement (B) et seulement en présence d'un paramètre d'événement (E) défini,
**caractérisé en ce**
**qu'**une alimentation en énergie (4) est prévue, qui alimente le système électronique (10) et/ou l'entraînement (20) en puissance électrique de manière indépendante par rapport au véhicule et autonome.

2. Dispositif selon la revendication 1,
**caractérisé en ce**
**que** le système électronique (10) peut être relié à un système de bus externe (3) du véhicule automobile (1), en particulier à un système de bus LIN (3) ou un système de bus CAN (3).

3. Dispositif selon la revendication 1 ou 2,
**caractérisé en ce**
**qu'**au moins deux paramètres de fonctionnement (B) sont vérifiés dans l'unité de décision (12) pour permettre une activation de l'entraînement (20), l'unité de décision (12) présentant une valeur seuil (S) pour chacun des deux paramètres de fonctionnement (B), une activation de l'entraînement (20) n'étant déclenchable que si les deux paramètres de fonctionnement (B) ont atteint leurs valeurs seuils (S).

4. Dispositif selon l'une des revendications précédentes,
**caractérisé en ce**
**que** le(s) paramètre(s) de fonctionnement (B) est/sont la vitesse du véhicule et/ou le régime du moteur.

5. Dispositif selon l'une des revendications précédentes,
**caractérisé en ce**
**que** le paramètre d'événement (E) est déterminé par au moins l'un des événements suivants :
frein à main activé,
porte, en particulier porte de véhicule, ouverte,
actionnement actif d'une touche d'un émetteur d'identification (41),
détection par le capteur de poids d'un siège de véhicule, en particulier du siège conducteur, d'une valeur de poids définie,
émetteur d'identification (41) hors de portée du véhicule (1),
actionnement d'une pédale de frein ou d'une pédale d'embrayage,
contact avec une poignée de véhicule (42) de la porte de véhicule,
contact avec le commutateur marche-arrêt de démarrage du moteur de véhicule,
approche du commutateur marche-arrêt de démarrage du moteur de véhicule.

6. Dispositif selon l'une des revendications précédentes,
**caractérisé en ce**
**que** l'activation de l'entraînement (20) déclenche un déplacement de l'élément de blocage (21) dans l'état de verrouillage, dans lequel le composant essentiel au fonctionnement (22) est bloqué, ou que l'activation de l'entraînement (20) déclenche un déplacement de l'élément de blocage (21) dans l'état de déverrouillage, dans lequel le composant essentiel au fonctionnement (22) est libéré de l'élément de blocage (21).

7. Système de sécurité comprenant une unité de contrôle d'accès (40) et une unité de contrôle d'autorisation de conduite (30) d'un véhicule automobile (1),
**caractérisé en ce**
**que** l'unité de contrôle d'autorisation de conduite (30) présente un dispositif selon l'une des revendications 1 à 6.

8. Procédé d'une unité de contrôle d'autorisation de conduite (30) dotée d'un système électronique (10) qui effectue de manière autonome, indépendante par rapport à un véhicule automobile (1), une commande d'un entraînement (20) qui déplace un élément de blocage (21) entre un état de verrouillage et un état de déverrouillage, un composant essentiel au fonctionnement (22) du véhicule automobile (1) étant bloqué dans l'état de verrouillage et le composant essentiel au fonctionnement (22) étant libéré de l'élément de blocage (21) dans l'état de déverrouillage,
le système électronique (10) décidant, en fonction d'au moins un paramètre de fonctionnement (B) du véhicule automobile (1) et de la présence d'au moins un paramètre d'événement (E), de commander l'entraînement (20) de façon que l'élément de blocage (21) soit mis dans l'état de verrouillage,
**caractérisé en ce**
**qu'**une alimentation en énergie (4) est prévue, qui alimente le système électronique (10) et/ou l'entraînement (20) en puissance électrique de manière indépendante par rapport au véhicule et autonome.

9. Procédé selon la revendication 8,
**caractérisé en ce**
**que** le système électronique (10) tient compte, dans une unité de décision (12), d'au moins deux paramètres de fonctionnement (B) pour déclencher un déplacement de l'élément de blocage (21) dans l'état de verrouillage.

10. Procédé selon la revendication 8 ou 9,
**caractérisé en ce**
**que** le système électronique (10) déclenche un déplacement de l'élément de blocage (21) dans l'état de déverrouillage indépendamment du paramètre de fonctionnement (B) et seulement en fonction du paramètre d'événement (E).

11. Procédé selon la revendication 10,
**caractérisé en ce**
**que** le paramètre d'événement (E) est déclenché consciemment par l'utilisateur ou que le paramètre d'événement (E) est déclenché inconsciemment.

12. Procédé selon l'une des revendications précédentes,
**caractérisé en ce**
**qu'**avant que l'élément de blocage (21) soit déplacé, une authentification (A) est effectuée pour déterminer dans quelle mesure une personne est autorisée à activer l'élément de blocage (21).
